**Europäisches Patentamt**

**European Patent Office**

**Office européen des brevets**

(19)

(11) Veröffentlichungsnummer: **0 143 970**

**B1**

(12)

# EUROPÄISCHE PATENTSCHRIFT

(45) Veröffentlichungstag der Patentschrift:
29.03.89

(51) Int. Cl.⁴: **F 02 P 5/04,** G 01 L 23/22

(21) Anmeldenummer: **84112749.1**

(22) Anmeldetag: **23.10.84**

(54) **Messschaltung zur Ionenstrommessung.**

(30) Priorität: **02.11.83 DE 3339569**

(43) Veröffentlichungstag der Anmeldung:
**12.06.85 Patentblatt 85/24**

(45) Bekanntmachung des Hinweises auf die Patenterteilung:
**29.03.89 Patentblatt 89/13**

(84) Benannte Vertragsstaaten:
**AT BE CH DE FR GB IT LI NL SE**

(56) Entgegenhaltungen:
**DE-A-3 006 665**
**FR-A-2 063 377**
**FR-A-2 108 376**
**GB-A-1 190 438**
**GB-A-2 071 935**
**US-A-4 307 603**

(73) Patentinhaber: **Atlas Fahrzeugtechnik GmbH,
Eggenpfad 26, D-5980 Werdohl (DE)**

(72) Erfinder: **Blauhut, Reinhold, Eggenpfad 24, D-5980
Werdohl (DE)**
Erfinder: **Maciejewski, Boguslaw, Breslauer
Strasse 9, D-5980 Werdohl (DE)**

(74) Vertreter: **Hassler, Werner, Dr., Postfach 17 04
Asenberg 62, D-5880 Lüdenscheid (DE)**

EP 0 143 970 B1

2

**Beschreibung**

Die Erfindung betrifft eine Meßschaltung zur Ionenstrommessung im Verbrenrungsraum eines Ottomotors, mit einem Zündtransformator, dessen einen Zündstromkreis speisende Sekundärspule an der die positive Spannung des Zündstromkreis führenden Seite mit Masse und an der die negative Spannung des Zündimpulses führenden Seite über einen Verteiler mit den Zündfunkenstrecken verbunden ist, und mit einer in den Zündstromkreis eingefügten Parellelschaltung einer, bezogen auf den Zündstrom, in Sperrichtung gepolten Hochspannungszenerdiode und eines Kondensators als Meßspannungsquelle.

Unregelmäßige Schwankungen der Verbrennung, insbesondere Druckstöße bei der Verbrennung in den Verbrennungsräumen eines Ottomotors bezeichnet man als Klopfen. Dieses ist für den Motor außerordentlich schädlich und soll unterbunden werden.

Es ist bekannt, daß sich die beim Klopfen auftretenden Druckschwankungen in Schwankungen der Ionisierung und damit des Ionenstromes über die Zündfunkenstrecke bemerkbar machen. Infolgedessen kann man durch Messung des Ionenstromes innerhalb des Verbrennungsraumes während oder insbesondere im Anschluß an den Zündfunken Klopfvorgänge erkennen.

Eine Schaltung der eingangs genannten Art ist in der DE-A-3 006 665 beschrieben. Dort ist die Hochspannungszenerdiode an die die negative Hochspannung des Zündimpulses führende Seite der Sekundärspule angeschlossen, so daß die an der Zündelektrode anliegende Meßspannung positiv ist. Die positive Meßspannung an der spannungführenden Elektrode der Zündfunkenstrecke ist zwar erwünscht, weil man dann bei handelsüblichen Zündherzen aufgrund der geometrischen Verhältnisse ein höheres Nutzsignal erhält. Jedoch benötigt man bei dieser Schaltung einen besonderen Leitungsweg, um die Meßspannung von dem Kondensator zur Zündfunkenstrecke zu übertragen. Innerhalb dieses Leitungsweges sind außerdem hochohmige Widerstände erforderlich, die die Zündspannung abblocken. Diese hochohmigen Widerstände setzen jedoch selbstverständlich auch das nutzbare Meßsignal des Ionenstromes herab, so daß kaum ein auswertbares Signal zur Verfügung steht. Dieses geringe Meßsignal muß über abgeschirmte Leitungen und Ladungsverstärker zu den Auswerteschaltungen weitergeleitet werden. Eine solche Anordnung kann zwar in einem Meßlaboreingesetzt werden, ist jedoch für einen Serieneinsatz ungeeignet.

Aufgabe der Erfindung ist eine solche Ausbildung der Meßschaltung, daß die Meßspannung ohne die Empfindlichkeit beeinträchtigende Schaltelemente auf die Zündfunkenstreche geführt werden kann und daß im Serieneinsatz eine einwandfreie Auswertung der Meßspannung möglich ist.

Diese Aufgabe wird nach der Erfindung dadurch gelöst, daß die Parallelschaltung zwischen die die positive Spannung führende Seite der Sekundärspule und Masse eingeschaltet ist, daß die Sekundärspule jeweils über Dioden, deren Anode jeweils an die die negative Spannung des Zündimpulses führende Seite der Sekundärspule angeschlossen ist, unmittelbar mit den Zündfunkenstrecken verbunden ist und daß an die Primärwicklung des Zündtransformators ein Koppelkondensator zur Auskopplung des Ionenstromsignals angeschlossen ist.

Die Erfindung unterscheidet sich dadurch in nicht naheliegender Weise vom Stand der Technik, als die Meßspannungsquelle auf der hiederspannungsseite der Zündspule angeschlossen ist. Die Meßspannung wird unter Überbrückung des Zündverteilers über Dioden den Zündkerzen zugeleitet. Es sind daher in dem Meßstromkreis keine Schaltelemente zur Absperrung der Hochspannung erforderlich. Der Zündtransformator dient als Übertrager für das Meßsignal, da der Zündtransformator für die Meßfrequenzen als niederohmig anzusehen ist. Dieser Übertrager ist also bereits durch seine Konstruktion als Zündtransformator hochspannungsfestausgelegt, so daß hierdurch keine Beeinträchtigung des Zündstromkreises möglich ist und keine zusätzlichen hochspannungsfesten Schaltelemnte erforderlich sind.

Eine Ausfürungsform der Erfindung wird im folgenden unter Bezugnahme auf die anliegende Zeichnung einer Schaltung der Erfindung erläutert.

Die dargestellte Schaltung umfaßt einen Zündtransformator 1 mit einer Primärspule 2 und einer Sekundärspule 3. Die Primärspule 2 ist in den Kollektorstromkreis eines Schalttransistors 4 eingeschaltet. Auf der Basisleitung 5 wird der Auslöseimpuls für den Zündimpuls übertragen. Zur Auslösung des Zündimpulses wird der Schalttransistor 4 gesperrt, so daß das Magnetfeld in der Primärspule 2 zusamsenbricht und in der Sekundärspule 3 eine Hochspannung induziert wird, die einen Zündimpuls 6 erzeugt.

Der Zündimpuls 6 tritt an der Sekundärspule 3 mit der angegebenen Polaritet auf. Die die positive Spannung führende Seite der Sekundärspule 3 ist über ein Parallelschaltung eines Kondensators 7 und einer Zenerdiode 8 mit Masse verbunden. Die die negative Spannung führende Seite der Sekundärspule 3 ist über einen Zündverteiler 9 mit den Zündfunkenstrecken 10, 11, 12, 13, also den jeweiligen Zündkerzen, der Verbrennungsräume verbunden. Für die postive Meßspannung überbrücken Dioden 14, 15, 16, 17 den Zündverteiler 9 und sind in der angegebener Polung eingefügt, indem die Anoden der Dioden 14, 15, 16, 17 mit der die negative Spannung des Zündimpulses 6 führenden Seite der Sekundärspule 3 verbunder sind.

An die Primärspule 2 des Zündtransformators 1 ist ein Koppelkondensator 18 und eine Ausgangsleitung 19 angeschlossen.

Jeweils durch einen Zündimpuls 6 wird ein Stromfluß in den beschriebenen Zündstromkreis und durch die Meßspannungsquelle erzeugt, so daß an der Hochspannungszenerdiode 8 die Zenerspannung abfällt und der Kondensator 7 in der dargestellten Weise auf eine positive Spannung aufgeladen wird. Dieser Spannungsabfall an der Hochspannungszenerdiode 8 bzw. die Ladespannung des Kondensators 7 beträgt 200 bis 500 V. Die Spannung des Zündimpulses 6 wird dadurch nicht merklich beeinträchtigt. Nach Abklingen des Zündimpulses stellt der Kondensator 7 eine Meßspannungsquelle dar, die sich über den Zündstromkreis und insbesondere über die jeweils ionisierte Zündfunkenstrecke entlädt. Dieser Stromfluß hängt von der Ionisierung in der Zündfunkenstrecke ab, so daß Schwankungen dieser Ionisierung eine Modulation des Entladestromes des Kondensators 7 bewirken. Hierdurch ist es möglich, Klopfzustände zu erkennen.

Diese Schwankungen des Entladestromes also des Ionenstromes werden über den Zündtransformator 1 auf die Primärspule 2 übertragen. Der Zündtransformator 1 hat für die im wesentlichen niederfrequenten Schwankungen des Ionenstromes in einem Frequenzbereich zwischen 8 und 15 kHz einen geringen Widerstand, so daß der Entladestrom bzw. Meßstrom hierdurch nicht beeinträchtigt wird und außerdem ein hohes Nutzsignal auf der Primärseite zur Verfügung steht. Die durch den Ionenstrom verursachten Spannungsschwankungen werden über den Koppelkondensator 18 ausgekoppelt und auf der Ausgangsleitung 19 als Klopfsignal zu Auswerteschaltungen übertragen.

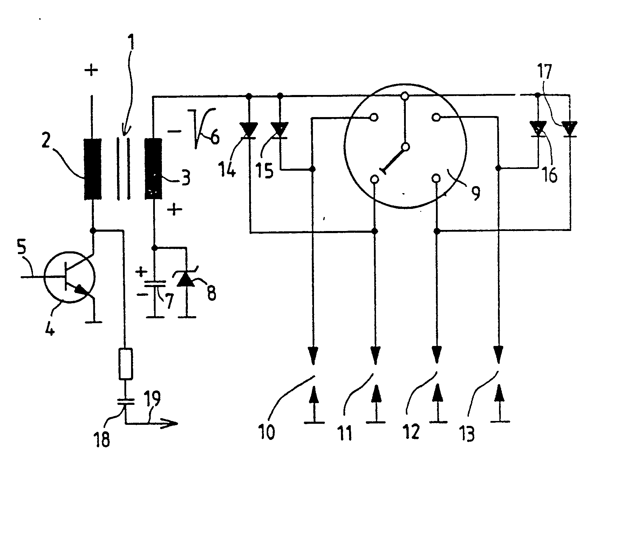

## Patentanspruch

Meßschaltung zur Ionenstrommessung im Verbrennungsraum eines Ottomotors, mit einem Zündtransformator, dessen einen Zündstromkreis speisende Sekundärspule an der die positive Spannung des Zündimpulses führenden Seite mit Masse und an der die negative Spannung des Zündimpulses führenden Seite über einen Verteiler mit den Zündfunkenstrecken verbunden ist, und mit einer in den Zündstromkreis eingefügten Parallelschaltung einer, bezogen auf den Zündstrom, in Sperrichtung gepolten Hochspannungszenerdiode und eines Kondensator als Meßspannungsquelle, dadurch gekennzeichnet, daß die Parallelschaltung zwischen die die positive Spannung führende Seite der Sekundärspule (3) und Masse eingeschaltet ist, daß die Sekundärspule (3) jeweils über Dioden (14, 15, 16, 17), deren Anode jeweils an die die negative Spannung des Zündimpulses führende Seite der Sekundärspule (3) angeschlossen ist, unmittelbar mit den Zündfunkenstrecken (10, 11, 12, 13) verbunden ist und daß an die Primärwicklung (2) des Zündtransformators ein Koppelkondensator (16) zur Auskopplung des Ionenstromsignals angeschlossen ist.

## Claim

Measuring circuit for measuring an ionic current in the combustion chamber of a petrol engine, having an ignition transformer, whereof the secondary winding supplying an ignition circuit is connected to earth on the side having the positive voltage of the ignition pulse and is connected via a distributor to the ignition spark gaps on the side having the negative voltage of the ignition pulse, and having a parallel circuit, included in the ignition circuit, of a high-tension Zener diode which is polarized so as to be reverse biased by the ignition current, and of a capacitor acting as the measurement voltage source, characterized in that the parallel circuit is inserted between the side of the secondary winding (3) carrying the positive voltage and earth, in that the secondary winding (3) is connected via respective diodes (14, 15, 16, 17), whereof the respective anode is connected to the side of the secondary winding (3) carrying the negative voltage of the ignition pulse, and directly to the ignition spark gaps (10, 11, 12, 13), and in that a coupling capacitor (18) is connected to the primary winding (2) of the ignition transformer for outputting the ionic current signal.

## Revendication

Circuit de mesure pour la mesure d'un courant ionique dans la chambre de combustion d'un moteur à allumage par étincelle, comprenant un transformateur d'allumage, dont l'enroule ment secondaire d'alimentation d'un circuit d'allumage est, du côté ou est appliquée la tension positive de l'impulsion d'allumage, relié à la masse et, du côté où est appliquée la tension négative de l'impulsion d'allumage, relié à des éclateurs à étincelle d'allumage par l'intermediaire d'un distributeur, et un montage en parallèle, inséré dans le circuit d'allumage, d'une diode Zener à haute tension polarisée en blocage par rapport au courant d'allumage et d'un condensateur comme source de tension de mesure, caractérisé en ce que le montage en parallele est intercalé entre le côté de l'enroulement secondaire (3), auquel est appliquée la tension positive, et la masse, en ce que l'enroulement secondaire (3) est relié directement à chacun des éclateurs à étincelle d'allumage (10, 11, 12, 13) par l'intermédiaire de diodes (14, 15, 16, 17), dont l'anode est chaque fois raccordée au côté de l'enroulement secondaire (3) auquel est appliquée la tension négative de l'impulsion d'allumage, et en ce qu'un condensateur de couplage (18) est raccordé à l'enroulement primaire (2) du transformateur d'allumage pour le découplage du signal de courant ionique.